# EUROPEAN PATENT APPLICATION

(11) **EP 4 101 564 A1**
(43) Date of publication of application: **14.12.2022**
(21) Application number: 21178020.0
(22) Date of filing: 07.06.2021
(51) Int. Cl.: B22F 10/28, B22F 10/31, B22F 10/368, B22F 10/85, B22F 12/90, B22F 12/45, B33Y 10/00, B33Y 30/00, B33Y 50/02

(54) **METHOD AND APPARATUS FOR MONITORING AN OPERATION OF A POWDER BED FUSION ADDITIVE MANUFACTURING MACHINE**

(71) Applicant: Siemens Energy Global GmbH & Co. KG, 81739 München (DE)
(72) Inventor: Rule, David, Pompano Beach, 33062 (US); Schurb, Julius, 14169 Berlin (DE)

(57) **Abstract**

A method of monitoring an operation of a powder bed fusion machine (100) is provided, wherein a position (P) of a working plane (WP) relative to a beam control (3) is observed, and wherein a calibration of the machine (100) is triggered once a misalignment (m) of the position (P) occurs and an intensity or amplitude of said misalignment (m) exceeds a predetermined threshold. Moreover, a related apparatus (50) for monitoring a powder bed fusion additive manufacturing operation is provided and a related use of said apparatus.

## Description

The present invention relates to a method of monitoring an operation of a powder bed fusion machine, preferably a multi-laser machine. Moreover, an apparatus for monitoring a related operation, a dedicated powder bed fusion machine and the use of the given apparatus are described.

The additive manufacturing (AM) route is particularly predestined for components or parts of complex shape or filigree structures, like cooled or coolable components of high-performance materials. Such part may particularly relate to turbo machines, e.g. application in the flow path hardware of a gas turbine. In the alternative, the part may pertain to a high-performance component, such as a component applied in power generation, in the aviation or the automotive industry.

Additive manufacturing or 3D-printing techniques comprise e.g. powder bed fusion (PBF) methods, such as selective laser melting (SLM), selective laser sintering (SLS) and electron beam melting (EBM).

Related apparatuses or setups for such methods usually comprise a manufacturing platform or build substrate on which the part may be built layer-by-layer after the feeding of a layer of built material which may then be melted, e.g. by an energy beam, like a laser, and subsequently solidified. The layer thickness is determined by a recoater that moves, e.g., automatically, over the powder bed and removes excess material from a manufacturing plane and/or build space. Typical layer thicknesses amount to between 20 µm and 40 µm. During the manufacture, said energy beam scans over the surface and melts the powder on selected areas which may be predetermined by a CAD-file according to the geometry of the part to be manufactured. Said scanning or irradiation is preferably carried out in a computer-implemented way or via computer-aided means, such as Computer-Aided-Manufacturing (CAM) instructions, which may be present in the form of a dataset. Said dataset or CAM-file may be or refer to a computer program or computer program product.

Particularly but not only in case of complex multi-laser PBF machines, inter alia, a complex calibration of the scan field is required in order to obtain a good scanning and manufacturing result. These calibrations usually require to be carried out at temperatures close to an operating temperature of the related beam controls or scanner unit. Any disturbing incident which effects good alignment of the beam control, e.g. as compared to a clamping system, build platform or working plane is likely to affect accurate service of the machine, and (re-)calibration or the machine is required. It is apparent that the re-calibration itself is also complex, as e.g. technicians frequently need to maintain or overhaul the machines on site and take care of complex recalibration of multi-laser machines, such as prior to any major additive manufacturing build job.

It is thus an object of the present invention to provide means that overcome these differences and particularly avoid undue calibration procedures but simultaneously assure that a PBF machine is a proper calibration state prior to any given operation.

The mentioned object is achieved by the subject-matters of the independent claims. Advantageous embodiments are subject-matter of the dependent claims.

An aspect of the present invention relates to a method of monitoring an operation of a powder bed fusion machine, preferably a multi-laser machine, wherein at least a position or orientation of the working plane relative to a beam control or corresponding scanner optics is observed, and wherein a calibration of the machine is triggered once a misalignment of the working position occurs, and an intensity or amplitude of said misalignment e.g. exceeds a pre- determined threshold or threshold value.

Alternatively, it is contemplated by the present invention that a position between a component of the beam control, beam scanner or beam optics and a further component of said control is observed and a related calibration triggered.

Although said threshold or threshold value may be difficult to quantify as it depends on the specific manufacturing setup, it is apparent that already vibrations of small amplitudes, but strong impact may affect the calibration of the machine.

The term "working plane" shall preferably pertain either to a surface of a build platform onto which the part at issue is established, of an already (partly) established structure on top of said working plane, and/or by a plane or surface which is provided by a related powder bed.

With the given measures, the above-mentioned problems with regard to the calibration may be overcome and any insufficient setup with regard to the working plane and a related optics unit may be prevented.

In an embodiment the mentioned misalignment is caused by any inaccuracy, incident or influence affecting the relative position of the working plane and the beam control, such as percussion, vibration or a loose, untightened, or inaccurate clamping system, fixing the build platform during the operation of the machine.

The inventive measures even help to avoid inaccurate scanning patterns in case that the clamping system of the platform is poorly adjusted.

In an embodiment a distance and/or relative orientation between the working plane and the beam control, a beam optics of beam scanner is observed during the monitoring.

In an embodiment the threshold defines a misalignment which, when the threshold is exceeded, strongly affects a scan accuracy of the machine, such as an inaccuracy that leads to an adverse structural result or dimensional inaccuracy of the part to be manufactured.

In an embodiment the temperature of the machine, or an optical cabinet of the same is observed and/or monitored during operation of the machine, wherein a calibration of the machine is triggered once a temperature beyond operation temperature limits is measured. This embodiment assures that particularly temperature-induced misalignment with regard to the mentioned relative position is also accounted for. This is of particular benefit, as there may be huge thermal gradients present in such multi-laser machines during regular operation.

In an embodiment the operating temperature is a temperature of the beam scanner and/or a temperature of related scanning optics for controlling the related beam of the machine.

In an embodiment recalibration is carried out in case that misalignment and/or a temperature beyond the tolerance is detected or measured. It is to be understood that an excess temperature may as well lead to a misalignment in the relative position, such as by way of different thermal expansions in the system.

Accordingly, depending on the cause of the disturbance of the machine, the calibration may as well be carried out differently. E.g. when only an access temperature is measured, but no spatial or mechanical misalignment, the measures of calibration may be different from those which are appropriate when another vibration-induced misalignment is measured as well.

In an embodiment the calibration is a spatial calibration of the machine.

In an embodiment, the machine is a multi-laser powder bed fusion machine.

A further aspect of the present invention relates to an apparatus for monitoring such powder bed fusion additive manufacturing operation, the apparatus comprising an acceleration sensor for detecting misalignment in the relative position of the working plane and the beam control, and the thermocouple for detecting a temperature during operation of the machine, wherein the acceleration sensor and the thermocouple are functionally coupled, controlled and/or connected such that the calibration is triggered once a misalignment and/or an access temperature is detected.

Due to the mentioned coupling or joint controls and the related monitoring of temperature as well as mechanical incidents, it may advantageously be assured that the machine is always (when used) in a proper setup and provides for the intended accuracy that is needed for a proper structural result.

In an embodiment the apparatus is or is part of a kit applicable to a, e.g. conventional, powder bed fusion machine, such as a multi-laser machine.

In an embodiment the thermocouple is arranged and/or preferably thermally coupled to an optics unit of the powder bed fusion machine. In other words, the thermocouple may particularly be set up in thermal communication to the beam scanner or the scanning optics. This embodiment advantageously assured that an expedient temperature monitoring is facilitated.

A further aspect of the present invention relates to the powder bed fusion machine, particularly a multi-laser machine, comprising the apparatus as described.

A further aspect of the present invention relates to the use of the apparatus as described as a calibration alert for a powder bed fusion additive manufacturing machine and/or related build job.

Advantages and embodiments relating to the described monitoring method and/or the described apparatus may as well pertain or be valid with regard to the apparatus, and vice versa.

Further, features and advantageous embodiments become apparent from the following description of the exemplary embodiment in connection with the Figures.

Figure 1 indicates in a schematic sectional view, principles of a powder bed fusion process along with an apparatus according to the present invention.

Figure 2 shows in a schematic flow chart method steps according to the present invention.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

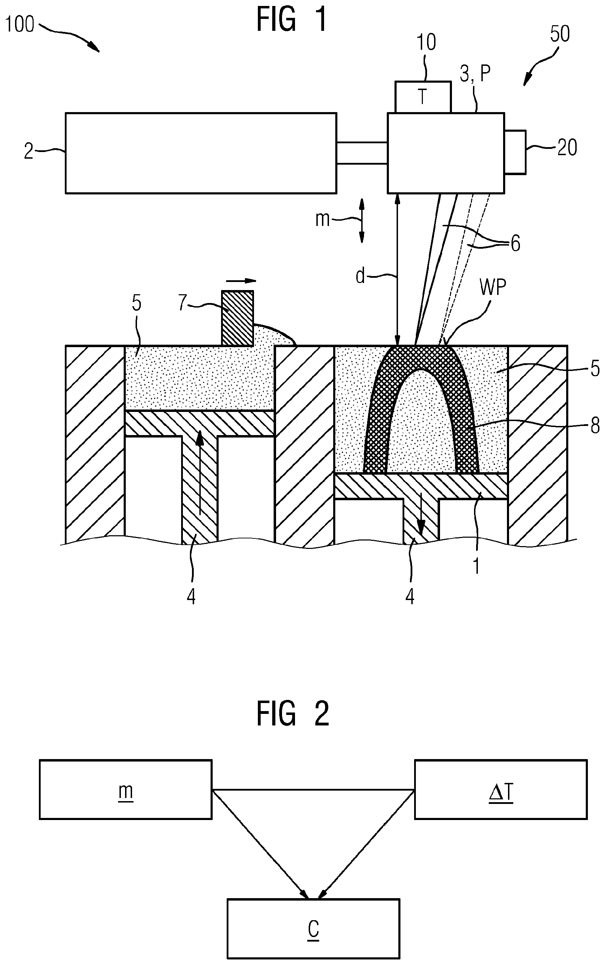

Figure 1 shows, by way of a sectional schematic of a powder bed fusion machine 100, basic principles of a powder bed fusion additive manufacturing principle.

On the right of the device 100 a substrate or build platform 1 is shown. In an initial stage of any build job of a component 8, said platform 1 preferably forms a working plane (cf. numeral WP below), onto which the part 8 is fused in a layer-by-layer fashion. Therefore, a build material 5 which may be retained in a supply chamber 4 (shown on the left in Figure 1) is provided layerwise by a recoater onto the working plane WP. Then, each powder layer (not explicitly indicated) is selectively irradiated by an energy beam 6 that is preferably controlled by a beam optics or scanner 3. Said beam 6 may originally be omitted from a beam source 2, such as a laser or electron beam source.

After the selective irradiation of each layer by the related powder bed fusion (PBF) method according to the intended design of the part 8, the substrate 1 is preferably lowered according to the amount of the layer thickness.

It shall be understood that principles of the recoating or distribution of any new powder layer may not only be applied to a device having a material feed or recoating system as sketched herein. In the alternative, e.g. the providing of the built material 5 may proceed via any other apparatus, such as by a roller or even providing it from the top to the manufacturing plane P.

The machine 100 is preferably a multi-laser powder bed fusion machine. Hence, the scan is preferably configured to control the plurality of laser beams, such as for ?? or more laser beams, wherein one of which is indicated by the dashed contour 6.

Such machines or devices, and as well the related laser controls and scanning strategies are highly sophisticated and even though significant progress in the related development has been made, it is still a challenge to reliably and reproducibly manufacture high-performance components with proper structural quality and dimensional accuracy. Particularly, (spatial) re-calibration of the machine setup is often required after any given build job due to external influences that particularly affect the relative position or spatial arrangement (cf. Numeral P below) of or between the scanning unit 3 with regard to the working plane WP. In turn, the working plane WP finally determines the scanning accuracy and finally dimensional accuracy of the part 8 to be manufactured.

Such influence may e.g. be any incident affecting the mentioned relative position, such as any percussion, vibration or e.g., a loose or inaccurate clamping system of the substrate 1. As a consequence, said incident is likely to cause a misalignment as indicated with numeral m, between the working plane WP and the position of the scanner 3.

Numeral d in Figure 1 indicates the distance between the scanner beam controls 3 and the working plane WP.

According to the present invention, an apparatus 50 for monitoring a powder bed fusion additive manufacturing operation is contemplated.

The apparatus 50 comprises an acceleration sensor 20 for detecting misalignment m in the relative position P of the working plane WP and the beam control 3. To this effect, the sensor 20 is preferably set up directly in or at the beam controls 3 or a corresponding optical cabinet of the machine 100.

Furthermore, the apparatus 50 comprises a thermocouple 10 for detecting a temperature T during operation of the machine 100. As indicated in the pictogram of Figure 1, the thermocouple 10 is arranged in, at or in thermal communication to the optics or scanning unit 3 unit of the machine 100. The same applies for the acceleration sensor, which expediently allows to accurately detect any (spatial) misalignment m.

Preferably, the acceleration sensor 20 and the thermocouple 10 are functionally coupled such that the calibration (cf. numeral C in Figure 2) is triggered once a misalignment m and/or an excess temperature ΔT is detected.

Said apparatus 50 may be or be part of a kit applicable to state-of-the-art a powder bed fusion machine 100.

Figure 2 shows a schematic flow chart indicating method steps of the present invention. The invention relates to a method of monitoring the operation of the machine 100.

In this process, the mentioned relative position P or related relative orientation of the working plane WP and the beam controls 3 is observed, and (spatial) calibration C of the machine 100 is triggered once a misalignment m of the position P occurs and an intensity or amplitude of said misalignment m exceeds a predetermined threshold. To this effect, the indicated distance d is preferably observed during the monitoring by means of the mechanical or shock sensor 20.

It is also part of the present invention that the (relative) position P relates to a component of the beam control and a further component or part of said control. To this effect, the observation and subsequent calibration of the relative orientation may be applied also (only) to components of the beam scanner or optics 3 (not explicitly indicated in Figure 1) .

Said threshold preferably relates to the misalignment m which, which, when exceeded, strongly affects a scan accuracy of the machine 100.

Likewise, the calibration C is preferably triggered once a temperature T which is observed during operation of the machine 100, exceeds or is measured beyond certain temperature limits which correspond to a regular operation of the scanner 3 and/or the device 100. This situation is indicated by the arrows as shown in Figure 2, wherein numeral ΔT shall indicate an excess temperature T exceeding said operational tolerance limits.

In other words, the use of the scanner or controls thermocouple may advantageously create a set point for the scan field alignment calibration temperature and monitor the optical cabinet temperature to ensure the scan field alignment stays within its tolerance, as required for an accurate scanning result.

The horizontal line of Figure 2, connecting the squares indicating the detection of the misalignment m and that one of the excess temperature ΔT shall indicate a functional connection between the outlined mechanical and thermal detection principle. In particular, said functional connection may point to the situation in which different calibration steps are triggered and/or finally carried out depending on the cause of the misalignment.

It shall be understood that said misalignment can thus be caused by the mechanical incident or by a thermally-induced misalignment, which may be due to different thermal expansion behaviour in the system.

The method as described herein may relate to the use of the described principles as a calibration alert function for a powder bed fusion additive manufacturing machine 100. Such reliable alert, monitoring or detection of incidents affecting the calibration of the machine, advantageously prevent service of such complex machines in an inaccurate state. Thereby, valuable processing capacity may be conserved, and wastage of expensive materials and processing time prevented.

## Claims

1. Method of monitoring an operation of a powder bed fusion machine (100), wherein a position (P) of a working plane (WP) relative to a beam control (3) is observed, and wherein a calibration of the machine (100) is triggered once a misalignment (m) of the position (P) occurs and an intensity or amplitude of said misalignment (m) exceeds a predetermined threshold.

2. Method according to claim 1, wherein the misalignment (m) is caused by any influence affecting the relative position (P) of the working plane and the beam control, such as percussion, vibration, or an untightened or inaccurate clamping system.

3. Method according to claim 1 or 2, wherein a distance between the working plane and a beam scanner (3) is observed during the monitoring.

4. Method according to one of the previous claims, wherein the threshold defines a misalignment (m) which, when the threshold is exceeded, strongly affects a scan accuracy of the machine (100).

5. Method according to one of the previous claims, wherein a temperature (T) is observed during operation of the machine (100), and wherein a calibration of the machine (3) is triggered once a temperature beyond operation temperature limits is measured.

6. Method according to claim 5, wherein the temperature (T) is a temperature of a beam scanner (3) and/or a temperature of related scanning optics for controlling a beam in the machine (100).

7. Method according to claim 5 or 6, wherein a calibration (C) is carried out in case that misalignment (m) and/or a temperature beyond the tolerance is detected.

8. Method according to one of the previous claims, wherein the calibration (C) is a spatial calibration of the machine (100) .

9. Method according to one of the previous claims, wherein the machine (100) is a multi-laser powder bed fusion machine.

10. Apparatus (50) for monitoring a powder bed fusion additive manufacturing operation according to one of the previous claims, the apparatus (50) comprising:
- an acceleration sensor (20) for detecting misalignment in the relative position (P) of the working plane (WP) and the beam control (3), and
- a thermocouple (10) for detecting a temperature (T) during operation of the machine (100), wherein the acceleration sensor (20) and the thermocouple (10) are functionally coupled such that the calibration (20) is triggered once a misalignment (m) and/or an excess temperature (T) is detected.

11. Apparatus (50) according to claim 10, wherein the apparatus is or is part of a kit applicable to a powder bed fusion machine (100), such as a multi-laser machine.

12. Apparatus (50) according to claim 10 or 11, wherein the thermocouple (10) is arranged in an optics (3) unit of the powder bed fusion machine (100).

13. Powder bed fusion machine (100), particularly a multi-laser machine, comprising the apparatus (50) according to one of claims 10 to 12.

14. Use of the apparatus (50) according to one of claims 10 to 13 as a calibration alert for a powder bed fusion additive manufacturing machine (100).
